# EUROPÄISCHE PATENTSCHRIFT

(11) **EP 3 892 232 B1**
(45) Veröffentlichungstag und Bekanntmachung des Hinweises auf die Patenterteilung: **07.06.2023**
(21) Anmeldenummer: 20168149.1
(22) Anmeldetag: 06.04.2020
(51) Int. Cl.: A61C 13/00, B33Y 10/00, B33Y 80/00

(54) **VERFAHREN ZUM HERSTELLEN EINES DENTALEN ARBEITSMODELLS**
METHOD OF MAKING A DENTAL WORKING MODEL
PROCÉDÉ DE FABRICATION D'UN MODÈLE DE TRAVAIL DENTAIRE

(43) Veröffentlichungstag der Anmeldung: 13.10.2021
(73) Patentinhaber: Institut Straumann AG, 4002 Basel (CH)
(72) Erfinder: Hoyer, Maximilian, 85604 Zorneding (DE); Kunert, Andreas, 86869 Oberostendorf (DE); Harsch, Sergej, 82340 Feldafing (DE)
(74) Vertreter: Michalski Hüttermann & Partner Patentanwälte mbB

(56) Entgegenhaltungen:
- WO-A1-85/00283
- DE-A1-102017 002 617
- DE-U1-202011 101 103
- DE-U1-202019 101 389
- US-A1- 2006 127 838
- US-A1- 2020 100 878

## Beschreibung

### Technisches Gebiet

Die Erfindung betrifft ein additives Verfahren zum Herstellen eines dentalen Arbeitsmodells für einen Artikulator, mit den Schritt additives Herstellen eines Dentalmodells. Die Erfindung betrifft ferner ein additiv hergestelltes dentales Arbeitsmodells für einen Artikulator gelöst, aufweisend ein additiv hergestelltes Dentalmodell.

### Hintergrund der Erfindung

DE 10 2017 002 617 A1 beschreibt ein Zahnkranzmodell für eine zahntechnische Modellierung, hergestellt in einer additiven und/oder spanabhebenden ganzheitlichen Fertigung unter Ausbildung einer Anzahl von Aufnahmelöchern, die der Aufnahme von Führungsstiften einer Trägerplatte für das Zahnkranzmodell dienen, wobei eine fertigungs- und/oder materialbedingte raue Innenfläche jedes Aufnahmeloches mit Hilfe einer mit Haftsitz in das Aufnahmeloch eingebrachten Hülse für die Führungsstifte gleitfreundlich ausgelegt ist.

US 2006/127838 A1 beschreibt eine Gießkammer zum Gießen eines physikalischen Zahnmodells, das einen Zahn eines Patienten darstellt, umfasst einen Kammerkörper und einen Deckel.

### Beschreibung der Erfindung

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch ein additives Verfahren zum Herstellen eines dentalen Arbeitsmodells für einen Artikulator gelöst, mit den Schritten:
Additives Herstellen einer Sockelplatte zum Befestigen an dem Artikulator, und
Additives Herstellen eines Dentalmodells, wobei
die Sockelplatte und das Dentalmodell lagesicher miteinander fixierbar gestaltet sind.

Additives Herstellen eines Splints, durch welchen durch Einführen zwischen der Sockelplatte und dem Dentalmodell die lagesichere Fixierung bewirkbar ist.

Nach einer anderen bevorzugten Weiterbildung ist der Splint in Form eines Keils, einer Schiene und/oder mit einem Federelement zum Herstellen einer kraft- und/oder formschlüssigen Fixierung gestaltet.

Bevorzugt ist an der Sockelplatte in oraler und/oder dorsaler Verlängerung des Dentalmodells, also insbesondere in Richtung Mundhöhle, eine Führung und/oder eine Überhöhung der ansonsten bevorzugt im wesentlichen ebenen Sockelplatte vorgesehen, zwischen welcher und dem Dentalmodell der Splint einführbar ist. Die Führung und/oder die Überhöhung erstreckt sich bevorzugt entlang der oralen und/oder dorsalen Seite der Sockelplatte. Entsprechend ist nach einer anderen bevorzugten Weiterbildung vorgesehen, dass der Splint an einem distalen Ende des Dentalmodells von bukkal in palantinaler, lingualer und/oder medialer Richtung einführbar ist, insbesondere zwischen die Führung und/oder die Überhöhung und dem Dentalmodell. Unmittelbar vor der Führung kann eine Nut in der Sockelplatte vorgesehen sein, welche sich entlang der Führung erstreckt und in welche der Splint einsetzbar und derart entlang der Führung führbar ist. Die Nut erstreckt sich bevorzugt von der einen Längsseite in palantinaler, lingualer und/oder medialer bis kurz vor die andere Längsseite der Sockelplatte.

Gemäß einer bevorzugten Weiterbildung umfasst die Sockelplatte eine obere Sockelplatte und eine untere Sockelplatte und/oder das Dentalmodell eine oberes Dentalmodell und ein unteres Dentalmodell umfasst. Das obere Dentalmodell entspricht bevorzugt einem Positivmodell eines Oberkiefers mit Zähnen und Zahnfleisch eines Patienten, während das untere Dentalmodell bevorzugt einem Positivmodell eines Unterkiefers mit Zähnen und Zahnfleisch des Patienten entspricht. Obere Sockelplatte und untere Sockelplatte sind bevorzugt zwecks einfacherer Herstellung identisch ausgeführt und lassen sich bevorzugt wiederverwenden. Bevorzugt ist dem oberen Dentalmodell und dem unteren Dentalmodell jeweils ein Splint zugeordnet.

Gemäß einer bevorzugten Weiterbildung weisen die Sockelplatte und das Dentalmodell an einem vestibulären Ende jeweils insbesondere parallel zueinander ausgerichtete und korrespondierende Fixierelemente auf, mittels derer die Sockelplatte und das Dentalmodell lagesicher miteinander fixierbar sind. Nach einer anderen bevorzugten Weiterbildung sind die Fixierelemente als Rastelemente und/oder als Schrägen ausgeführt. Bevorzugt werden die Fixierelemente beim additiven Herstellen in die Sockelplatte und das Dentalmodell mit eingebracht, so dass kein weiterer Arbeitsschritt notwendig ist. Weiter bevorzugt erlauben bereits die Fixierelemente das lagesichere Fixieren von die Sockelplatte und Dentalmodell miteinander, ohne dass es des Splints bedarf. Bevorzugt klemmt der Splint das Dentalmodell einerseits gegen die Führung und/oder Überhöhung und andererseits gegen die Fixierelemente.

Gemäß einer bevorzugten Weiterbildung ist eine der Sockelplatte zugewandte Unterseite des Dentalmodells wenigstens zum Teil geöffnet, so dass Stümpfe und/oder Implantatanaloge des Dentalmodells in okklusaler Richtung aus dem Dentalmodell herausdrückbar sind. Derart lassen sich in einfacher Weise unterschiedliche Stümpfe und/oder Implantatanaloge an dem Dentalmodell befestigen, testen oder auswechseln. Im Stand der Technik wird oftmals ein Dentalmodell aus Gips gesägt, um Stümpfe oder einzelne Zähne auf dem Dentalmodell entnehmen zu können. Bei der vorgeschlagenen Lösung des 3D-gedruckten Dentalmodells ist ein Zersägen jedoch ungeeignet.

Nach einer anderen bevorzugten Weiterbildung des Verfahrens sind die Sockelplatte und das Dentalmodell magnetfrei ausgeführt. Derart lässt sich die vorgeschlagene Lösung besonders einfach in einem einzigen Arbeitsschritt, nämlich einzig mittels 3D-Drucken, herstellen, ohne dass es weiterer Teile bedarf, um die Sockelplatte und das Dentalmodell lagesicher miteinander zu fixieren. Gleichzeitig werden gegenüber dem Stand der Technik die Herstellungskosten verringert, da keine Magnete oder sonstige Teile zur lagesicheren Fixierung benötigt werden.

Die Aufgaben wird ferner durch ein additiv hergestelltes dentales Arbeitsmodell für einen Artikulator gelöst, aufweisend
eine additiv hergestellte Sockelplatte, eingerichtet zum Befestigen an dem Artikulator, und
ein additiv hergestelltes Dentalmodell, wobei
die Sockelplatte und das Dentalmodell lagesicher miteinander fixierbar gestaltet sind.

Bei dem vorgeschlagenen Arbeitsmodell lassen sich die Sockelplatte und das Dentalmodell in einfacher und lagesichererweise miteinander fixieren, ohne dass es dazu einen Magneten oder vergleichbare aus dem Stand der Technik bekannter Mittel oder sonstiger Zukaufteile bedarf. Da die Sockelplatte und das Dentalmodell additiv hergestellt sind, entfällt auch das ansonsten aus dem Stand der Technik bekannte Sägen eines Gips-Dentalmodells, um Stümpfe oder einzelne Zähne zu entnehmen. Insbesondere durch einen nachfolgend beschriebenen Splint lässt sich das Fixieren und Lösen in besonders einfacher Weise bewerkstelligen.

Weiter weist das additiv hergestellte dentale Arbeitsmodell einen additiv hergestellten Splint auf, welcher eingerichtet ist, durch Einführen zwischen der Sockelplatte und dem Dentalmodell die lagesichere Fixierung zu bewirken.

Gemäß einer bevorzugten Weiterbildung des additiv hergestellten dentalen Arbeitsmodells weist die Sockelplatte und das Dentalmodell an einem vestibulären Ende jeweils insbesondere parallel zueinander ausgerichtete und korrespondierende Fixierelemente auf, welche eingerichtet sind, die Sockelplatte und das Dentalmodell lagesicher miteinander zu fixieren. Nach einer bevorzugten Weiterbildung sind die Fixierelemente als Rastelemente und/oder als Schrägen ausgeführt.

Gemäß einer bevorzugten Weiterbildung des additiv hergestellten dentalen Arbeitsmodells ist eine der Sockelplatte zugewandte Unterseite des Dentalmodells wenigstens zum Teil geöffnet, so dass Stümpfe und/oder Implantatanaloge des Dentalmodells in okklusaler Richtung aus dem Dentalmodell herausdrückbar sind. Nach einer bevorzugten Weiterbildung sind die Sockelplatte und das Dentalmodell magnetfrei ausgeführt.

Weitere Ausgestaltungen und Vorteile des Arbeitsmodells ergeben sich für den Fachmann aus dem zuvor beschriebenen Verfahren.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: ein additiv hergestelltes dentales Arbeitsmodell nach einem bevorzugten Ausführungsbeispiel der Erfindung in einer schematisch perspektivischen Ansicht,
- Fig. 2: das nicht zusammengesetzte dentale Arbeitsmodell gemäß Fig. 1 mit Sockelplatte und Dentalmodell in einer schematisch perspektivischen Draufsicht,
- Fig. 3: ein auf eine Sockelplatte aufgesetzte Dentalmodell gemäß Fig. 2 in einer schematischen Draufsicht, und
- Fig. 4: eine perspektivische Unteransicht des Dentalmodell gemäß Fig. 3 in einer schematischen Unteransicht.

### Detaillierte Beschreibung der Ausführungsbespiele

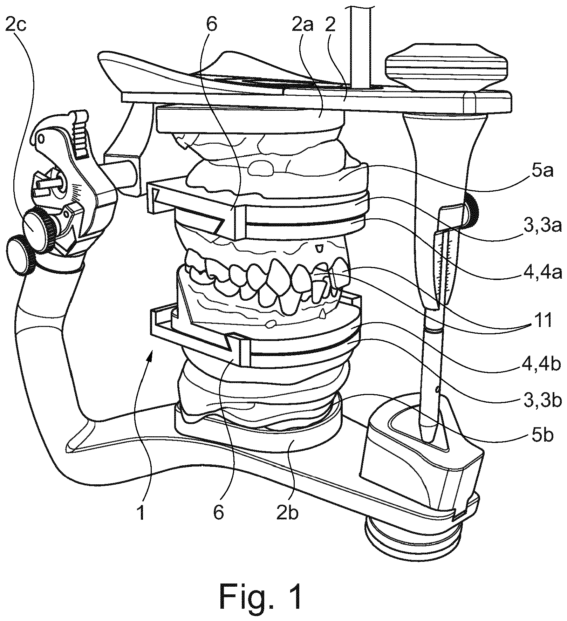

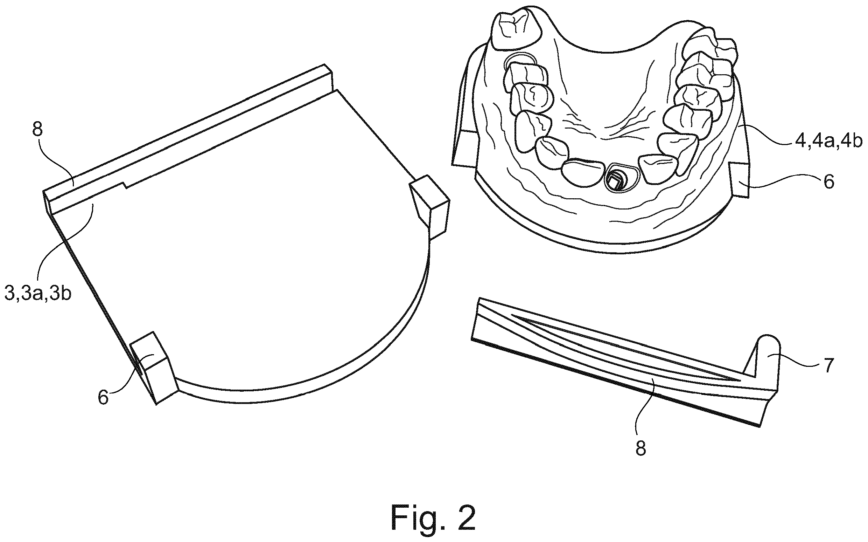

Fig. 1 zeigt ein additiv hergestelltes dentales Arbeitsmodell 1 nach einem bevorzugten Ausführungsbeispiel der Erfindung in einer schematisch perspektivischen Ansicht, welches zusammengesetzt in einem Artikulator 2 eingespannt ist. Das dentale Arbeitsmodell 1 weist, wie insbesondere aus der perspektivischen Draufsicht eines Teils des nicht zusammengesetzten dentalen Arbeitsmodells 1 aus Fig. 2 zu erkennen ist, eine additiv hergestellte Sockelplatte 3 und ein additiv hergestelltes Dentalmodell 4 auf.

Zurückkommend auf Fig. 1 umfasst die Sockelplatte 3 eine obere Sockelplatte 3a und eine untere Sockelplatte 3b und das Dentalmodell 4 eine oberes Dentalmodell 4a und ein unteres Dentalmodell 4b. Die obere Sockelplatte 3a ist mittels eines oberen Gipssockels 5a an einer oberen Artikulatorplatte 2a des Artikulators 2 starr und dauerhaft befestigt. In analoger Weise ist die untere Sockelplatte 3b mittels eines unteren Gipssockels 5b an einer unteren Artikulatorplatte 2b des Artikulators 2 starr und dauerhaft befestigt. Anstelle eines Gipssockels 5a, 5b können auch andere Mittel zur Befestigung verwendet werden.

Die obere Artikulatorplatte 2a und die untere Artikulatorplatte 2b sind über ein Gelenk 2c des Artikulators 2 miteinander verbunden. Da Sockelplatte 3 und Dentalmodell 4 lagesicher miteinander fixierbar gestaltet sind, lassen sich Kaubewegungen eines Patienten nachahmen. Sofern von Sockelplatte 3 und Dentalmodell 4 gesprochen wird, sind immer auch die obere Sockelplatte 3a und das obere Dentalmodell 4a sowie die untere Sockelplatte 3b und das untere Dentalmodell 4b mit umfasst.

Wie zuvor ausgeführt, sind Sockelplatte 3 und Dentalmodell 4 additiv hergestellt, was bedeutet, dass ein Druckermaterial, insbesondere ein Polymermaterial Schicht für Schicht aufgetragen werden, auch drucken genannt, um die Sockelplatte 3 und das Dentalmodell 4 zu erhalten. Der schichtweise Aufbau erfolgt computergesteuert insbesondere mittels eines DLP, digital light processing-Verfahrens, wobei als Druckermaterial ein insbesondere flüssiges Monomer verwendet wird, welches durch den Einfluss von UV-Licht aushärtet bzw. polymerisiert. Als Druckermaterial und/oder Polymermaterial lassen sich ebenso beispielsweise SHERAprint model plus UV grey/sand oder P pro Master model grey/dark beige verwende, oder alternativ die im Handel erhältlichen Materialien Accura 60, Accura ClearVue und RenShape 7870 verwenden. Andere Polymere, die insbesondere transparent sind und als biokompatibel bezeichnet werden, sind beispielsweise FullCure 630 und FullCure 810 oder WaterShed 11122, ProtoGen 18420 und BioClear. Zuvor wird das Gebiss eines Patienten beispielsweise mit einem Interoral-Scanner gescannt, um aus erhaltenen CAD-Rohdaten das Dentalmodell 4 additiv herzustellen. Das Dentalmodel 4 entspricht derart einem dreidimensionalen Positivmodell der Zähne und des Zahnfleisches des Patienten.

Zum lagesicheren Fixieren der Sockelplatte 3 und des Dentalmodells 4 miteinander weisen die Sockelplatte 3 und das Dentalmodell 4 an einem vestibulären Ende derselben jeweils parallel zueinander ausgerichtete und korrespondierende Fixierelemente 6 auf. Die Sockelplatte 3 weist eine im Wesentlichen ebene rechteckartige Erstreckung, wobei die vestibuläre Seite des Rechtecks mit einem Kreisbogensegment verlängert ist.

Wie insbesondere aus Fig. 2 zu erkennen ist, sind die Fixierelemente 6 an dem vestibulären Ende der Sockelplatte 3 an eckenartigen Bereichen zwischen dem Kreisbogensegment und einer bukkalen Seite der rechteckartigen Erstreckung gegenüberliegend und derart beabstandet angeordnet. Die Fixierelemente 6 sind als zur ebenen rechteckartigen Erstreckung in vestibulärer Richtung zulaufende Schrägen ausgeführt, in die an dem Dentalmodell 4 vorgesehene und korrespondierende ebenso als Schrägen ausgeführte Fixierelemente 6 einsetzbar sind, so dass die jeweiligen Fixierelemente 6 formschlüssig aneinander und das Dentalmodell 4 auf der Sockelplatte 3 zu liegen kommt.

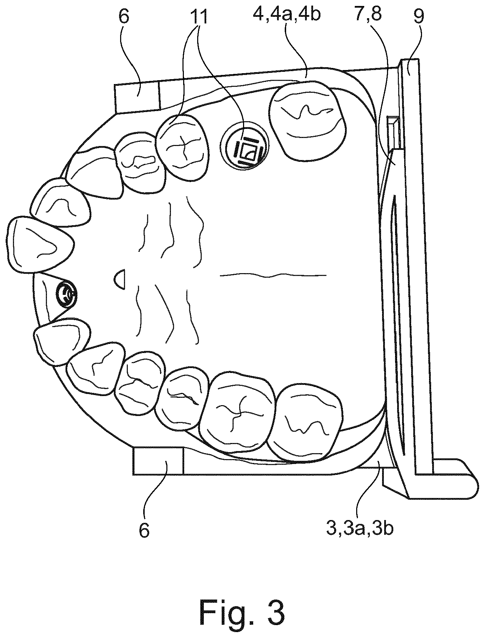

Auch wenn durch die Fixierelemente 6 die Sockelplatte 3 und das Dentalmodell 4 grundsätzlich lagesicher miteinander fixierbar sind, ist ein Splint 7 vorgesehen, welcher ebenso wie die Sockelplatte 3 und das Dentalmodell 4 additiv hergestellt ist. Der Splint 7 ist in Form einer Schiene 7 mit einem Federelement 8 zum Herstellen einer kraft- und/oder formschlüssigen Fixierung zwischen Sockelplatte 3 und Dentalmodell 4 ausgeführt, wie aus Fig. 2 oder Fig. 3 im Detail zu erkennen.

Zum Fixieren wird der Splint 7 an einem distalen Ende des Dentalmodells 3 von bukkal in palantinaler und/oder medialer Richtung zwischen Sockelplatte 3 und Dentalmodell 4 eingeführt, also in einer Richtung parallel zur oralen und/oder dorsalen Seite der rechteckartigen Sockelplatte 3. An der oralen und/oder dorsalen Seite der Sockelplatte 3 ist eine die Sockelplatte 3 an der oralen und/oder dorsalen Seite überragende und sich entlang der Seite erstreckende quaderartige Führung 9 vorgesehen, wodurch die Sockelplatte 3 in bukkaler Seitansicht eine annährend L-förmige Ausprägung erfährt, die nur am vestibulären Ende durch die Fixierelemente 6 unterbrochen ist.

Fig. 3 zeigt in Draufsicht das auf die Sockelplatte 3 aufgesetzte Dentalmodell 4, wobei die Fixierelemente 6 am vestibulären Ende ineinandergreifen. Am oralen und/oder dorsalen Ende ist der Splint 7 zwischen Sockelplatte 3 und Dentalmodell 4 eingeführt. Das Federelement 8 übt eine durch die Feder bedingte Kraft auf das Dentalmodell 4 aus, während der Splint an dem dem Federelement 8 gegenüberliegenden Ende an der Führung 9 abgestützt ist, so dass derart die Fixierelemente 6 gegeneinandergepresst werden. Im Ergebnis sind Sockelplatte 3 und Dentalmodell 4 lagesicher miteinander fixiert, obwohl sowohl Sockelplatte 3 und Dentalmodell 4 magnetfrei d.h. ohne Magnete ausgeführt sind.

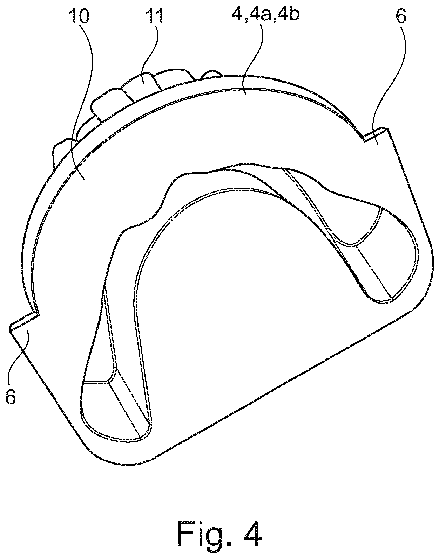

Schließlich zeigt Fig. 4 eine perspektivische Unteransicht des Dentalmodell 4, dessen der Sockelplatte 3 zugewandte Unterseite 10 wenigstens zum Teil geöffnet ist. Bedingt dadurch lassen sich Stümpfe und/oder Implantatanaloge 11 des Dentalmodells 4 in okklusaler Richtung aus dem Dentalmodell 4 herausdrücken, wie in der Draufsicht in Fig. 3 angedeutet, und gegen andere Stümpfe und/oder Implantatanaloge 11 auswechseln.

**Bezugszeichenliste**

| | |
|---|---|
| Arbeitsmodell | 1 |
| Artikulator | 2 |
| Obere Artikulatorplatte | 2a |
| Untere Artikulatorplatte | 2b |
| Gelenk | 2c |
| Sockelplatte | 3 |
| Obere Sockelplatte | 3a |
| Untere Sockelplatte | 3b |
| Dentalmodell | 4 |
| Oberes Dentalmodell | 4a |
| Unteres Dentalmodell | 4b |
| Oberer Gipssockel | 5a |
| Unterer Gipssockel | 5b |
| Fixierelement | 6 |
| Splint, Schiene | 7 |
| Federelement | 8 |
| Führung | 9 |
| Unterseite | 10 |
| Stümpfe, Implantatanaloge | 11 |

## Patentansprüche

1. Additives Verfahren zum Herstellen eines dentalen Arbeitsmodells (1) für einen Artikulator (2), mit den Schritten:
Additives Herstellen einer Sockelplatte (3, 3a, 3b) zum Befestigen an dem Artikulator (2),
Additives Herstellen eines Dentalmodells (4, 4a, 4b), und
Additives Herstellen eines Splints (7), durch welchen durch Einführen zwischen der Sockelplatte (3, 3a, 3b) und dem Dentalmodell (4, 4a, 4b) die Sockelplatte (3, 3a, 3b) und das Dentalmodell (4, 4a, 4b) lagesicher miteinander fixierbar sind, wobei
der Splint (7) an einem distalen Ende des Dentalmodells (4, 4a, 4b) von bukkal in palantinaler und/oder medialer Richtung einführbar ist.

2. Additives Verfahren nach dem vorhergehenden Anspruch, wobei der Splint (7) in Form eines Keils, einer Schiene (7) und/oder mit einem Federelement (8) zum Herstellen eine kraft- und/oder formschlüssigen Fixierung gestaltet ist.

3. Additives Verfahren nach einem der vorhergehenden Ansprüche, wobei die Sockelplatte (3, 3a, 3b) eine obere Sockelplatte (3a) und eine untere Sockelplatte (3b) und/oder das Dentalmodell (4, 4a, 4b) eine oberes Dentalmodell (4a) und ein unteres Dentalmodell (4b) umfasst.

4. Additives Verfahren nach einem der vorhergehenden Ansprüche, wobei die Sockelplatte (3, 3a, 3b) und das Dentalmodell (4, 4a, 4b) an einem vestibulären Ende jeweils korrespondierende Fixierelemente (6) aufweisen, mittels derer die Sockelplatte (3, 3a, 3b) und das Dentalmodell (4, 4a, 4b) lagesicher miteinander fixierbar sind.

5. Additives Verfahren nach dem vorhergehenden Anspruch, wobei die Fixierelemente (6) parallel zueinander ausgerichtet sind.

6. Additives Verfahren nach einem der beiden vorhergehenden Ansprüche, wobei die Fixierelemente (6) als Rastelemente und/oder als Schrägen ausgeführt sind.

7. Additives Verfahren nach einem der vorhergehenden Ansprüche, wobei eine der Sockelplatte (3, 3a, 3b) zugewandte Unterseite (10) des Dentalmodells (4, 4a, 4b) wenigstens zum Teil geöffnet ist, so dass Stümpfe und/oder Implantatanaloge (11) des Dentalmodells (4, 4a, 4b) in okklusaler Richtung aus dem Dentalmodell (4, 4a, 4b) herausdrückbar sind.

8. Additives Verfahren nach einem der vorhergehenden Ansprüche, wobei die Sockelplatte (3, 3a, 3b) und das Dentalmodell (4, 4a, 4b) magnetfrei ausgeführt sind.

9. Additiv hergestelltes dentales Arbeitsmodell (1) für einen Artikulator (2), aufweisend
eine additiv hergestellte Sockelplatte (3, 3a, 3b), eingerichtet zum Befestigen an dem Artikulator (2),
ein additiv hergestelltes Dentalmodell (4, 4a, 4b), und
einem additiv hergestellten Splint (7), eingerichtet durch Einführen zwischen der Sockelplatte (3, 3a, 3b) und dem Dentalmodell (4, 4a, 4b) zum lagesicheren Fixieren der Sockelplatte (3, 3a, 3b) und des Dentalmodells (4, 4a, 4b) miteinander, wobei
der Splint (7) an einem distalen Ende des Dentalmodells (4, 4a, 4b) von bukkal in palantinaler und/oder medialer Richtung einführbar ist.

10. Additiv hergestelltes dentales Arbeitsmodell (1) nach dem vorherigen Arbeitsmodell-Anspruch, wobei die Sockelplatte (3, 3a, 3b) und das Dentalmodell (4, 4a, 4b) an einem vestibulären Ende jeweils korrespondierende Fixierelemente (6) aufweisen, eingerichtet die Sockelplatte (3, 3a, 3b) und das Dentalmodell (4, 4a, 4b) lagesicher miteinander zu fixieren.

11. Additiv hergestelltes dentales Arbeitsmodell (1) nach dem vorherigen Arbeitsmodell-Anspruch, wobei die Fixierelemente (6) parallel zueinander ausgerichtet sind.

12. Additiv hergestelltes dentales Arbeitsmodell (1) nach einem der beiden vorherigen Arbeitsmodell-Ansprüche, wobei die Fixierelemente (6) als Rastelemente und/oder als Schrägen ausgeführt sind.

13. Additiv hergestelltes dentales Arbeitsmodell (1) nach einem der vorherigen Arbeitsmodell-Ansprüche, wobei eine der Sockelplatte (3, 3a, 3b) zugewandte Unterseite (10) des Dentalmodells (4, 4a, 4b) wenigstens zum Teil geöffnet ist, so dass Stümpfe und/oder Implantatanaloge (11) des Dentalmodells (4, 4a, 4b) in okklusaler Richtung aus dem Dentalmodell (4, 4a, 4b) herausdrückbar sind.

14. Additiv hergestelltes dentales Arbeitsmodell (1) nach einem der vorherigen Arbeitsmodell-Ansprüche, wobei die Sockelplatte (3, 3a, 3b) und das Dentalmodell (4, 4a, 4b) magnetfrei ausgeführt sind.

## Claims

1. Additive method for producing a dental working model (1) for an articulator (2), comprising the steps of:
additively producing a base plate (3, 3a, 3b) adapted to be attached to the articulator (2);
additively producing a dental model (4, 4a, 4b); and
additively producing a splint (7) by means of which by inserting it between the base plate (3, 3a, 3b) and the dental model (4, 4a, 4b), the base plate (3, 3a, 3b) and the dental model (4, 4a, 4b) can be fixed to one another in a positionally secure manner,
wherein the splint (7) can be inserted at a distal end of the dental model (4, 4a, 4b) from buccal in the palantinal and/or medial direction.

2. Additive method according to the preceding claim, wherein the splint (7) is designed in the form of a wedge, a rail (7) and/or with a spring element (8) for providing a force-fitting and/or form-fitting fixation.

3. Additive method according to any one of the preceding claims, wherein the base plate (3, 3a, 3b) comprises an upper base plate (3a) and a lower base plate (3b) and/or the dental model (4, 4a, 4b) comprises an upper dental model (4a) and a lower dental model (4b).

4. Additive method according to any one of the preceding claims, wherein the base plate (3, 3a, 3b) and the dental model (4, 4a, 4b) each have corresponding fixing elements (6) at a vestibular end, by means of which the base plate (3, 3a, 3b) and the dental model (4, 4a, 4b) can be fixed to one another in a positionally secure manner.

5. Additive method according to the preceding claim, wherein the fixing elements are aligned parallel to one another.

6. Additive method according to any one of the two preceding claims, wherein the fixing elements (6) are designed as latching elements and/or as slopes.

7. Additive method according to any one of the preceding claims, wherein an underside (10) of the dental model (4, 4a, 4b) facing the base plate (3, 3a, 3b) is at least partially open, so that stumps and/or implant analogs (11) of the dental model (4, 4a, 4b) can be pushed out of the dental model (4, 4a, 4b) in the occlusal direction.

8. Additive method according to any one of the preceding claims, wherein the base plate (3, 3a, 3b) and the dental model (4, 4a, 4b) are configured to be magnet-free.

9. Additively produced dental working model (1) for an articulator (2), comprising:
an additively produced base plate (3, 3a, 3b) adapted to be fixed to the articulator (2);
an additively produced dental model (4, 4a, 4b); and
an additively produced splint (7) adapted to be inserted between the base plate (3, 3a, 3b) and the dental model (4, 4a, 4b) for fixing the base plate (3, 3a, 3b) and the dental model (4, 4a, 4b) to each other in a positionally secure manner, wherein
the splint (7) can be inserted at a distal end of the dental model (4, 4a, 4b) from buccal in the palantinal and/or medial direction.

10. Additively produced dental working model (1) according to the preceding working model claim, wherein the base plate (3, 3a, 3b) and the dental model (4, 4a, 4b) each have corresponding fixing elements (6) at a vestibular end, configured to fix the base plate (3, 3a, 3b) and the dental model (4, 4a, 4b) to one another in a positionally secure manner.

11. Additively produced dental working model (1) according to the preceding working model claim, wherein the fixing elements (6) are aligned parallel to one another.

12. Additively produced dental working model (1) according to any one of the two preceding working model claims, wherein the fixing elements (6) are configured as latching elements and/or as slopes.

13. Additively produced dental working model (1) according to any one of the preceding working model claims, wherein an underside (10) of the dental model (4, 4a, 4b) facing the base plate (3, 3a, 3b) is at least partially open so that stumps and/or implant analogs (11) of the dental model (4, 4a, 4b) can be pushed out of the dental model (4, 4a, 4b) in the occlusal direction.

14. Additively produced dental working model (1) according to any one of the preceding working model claims, wherein the base plate (3, 3a, 3b) and the dental model (4, 4a, 4b) are configured to be magnet-free.

## Revendications

1. Procédé par addition permettant la fabrication d'un modèle de travail dentaire (1) pour un articulateur (2) avec les étapes :
de fabrication additive d'une plaque de socle (3, 3a, 3b) permettant la fixation sur l'articulateur (2),
de fabrication additive d'un modèle dentaire (4, 4a, 4b), et
de fabrication additive d'une éclisse (7) par laquelle, par l'insertion entre la plaque de socle (3, 3a, 3b) et le modèle dentaire (4, 4a, 4b), la plaque de socle (3, 3a, 3b) et le modèle dentaire (4, 4a, 4b) peuvent être fixés ensemble en position sure, dans lequel
l'éclisse (7) peut être insérée à une extrémité distale du modèle dentaire (4, 4a, 4b) à partir de la direction buccale dans la direction palatine et/ou la direction médiale.

2. Procédé par addition selon la revendication précédente, dans lequel l'éclisse (7) est conçue sous la forme d'un coin, d'un rail (7), et/ou avec un élément de ressort (8), pour la réalisation d'une fixation complémentaire par la force et/ou la forme.

3. Procédé par addition selon l'une des revendications précédentes, dans lequel la plaque de socle (3, 3a, 3b) comprend une plaque de socle supérieure (3a) et une plaque de socle inférieure (3b) et/ou le modèle dentaire (4, 4a, 4b) comprend un modèle dentaire supérieur (4a) et un modèle dentaire inférieur (4b).

4. Procédé par addition selon l'une des revendications précédentes, dans lequel la plaque de socle (3, 3a, 3b) et le modèle dentaire (4, 4a, 4b) présentent des éléments de fixation (6) respectivement en correspondance au niveau d'une extrémité vestibulaire, au moyen desquels la plaque de socle (3, 3a, 3b) et le modèle dentaire (4, 4a, 4b) peuvent être fixés ensemble en position sure.

5. Procédé par addition selon la revendication précédente, dans lequel les éléments de fixation (6) sont orientés parallèlement les uns par rapport aux autres.

6. Procédé par addition selon l'une des deux revendications précédentes, dans lequel les éléments de fixation (6) sont conçus comme des éléments de verrouillage et/ou comme des plans inclinés.

7. Procédé par addition selon l'une des revendications précédentes, dans lequel une face inférieure (10) du modèle dentaire (4, 4a, 4b) orientée vers la plaque de socle (3, 3a, 3b) est ouverte au moins partiellement de sorte que des moignons, et/ou des analogues d'implant (11) du modèle dentaire (4, 4a, 4b) peuvent être extraits par compression du modèle dentaire (4, 4a, 4b) en direction occlusale.

8. Procédé par addition selon l'une des revendications précédentes, dans lequel la plaque de socle (3, 3a, 3b) et le modèle dentaire (4, 4a, 4b) sont conçus exempts d'aimants.

9. Modèle de travail dentaire (1) fabriqué de manière additive pour un articulateur (2), présentant
une plaque de socle (3, 3a, 3b) fabriquée de manière additive conçue pour la fixation sur l'articulateur (2),
un modèle dentaire (4, 4a, 4b) fabriqué de manière additive, et
une éclisse (7) fabriquée de manière additive, conçue pour être insérée entre la plaque de socle (3, 3a, 3b) et le modèle dentaire (4, 4a, 4b) pour la fixation en position sure de la plaque de socle (3, 3a, 3b) et du modèle dentaire (4, 4a, 4b) ensemble, dans lequel
l'éclisse (7) peut être insérée à une extrémité distale du modèle dentaire (4, 4a, 4b) à partir de la direction buccale dans la direction palatine et/ou la direction médiale.

10. Modèle de travail dentaire (1) fabriqué de manière additive selon la revendication de modèle de travail précédente, dans lequel la plaque de socle (3, 3a, 3b) et le modèle dentaire (4, 4a, 4b) présentent des éléments de fixation (6) en correspondance respectivement au niveau d'une extrémité vestibulaire, au moyen desquels la plaque de socle (3, 3a, 3b) et le modèle dentaire (4, 4a, 4b) peuvent être fixés ensemble en position sure.

11. Modèle de travail dentaire (1) fabriqué de manière additive selon la revendication de modèle de travail précédente, dans lequel les éléments de fixation (6) sont orientés parallèlement les uns par rapport aux autres.

12. Modèle de travail dentaire (1) fabriqué de manière additive selon l'une des deux revendications de modèle de travail précédentes, dans lequel les éléments de fixation (6) sont conçus comme des éléments de verrouillage et/ou comme des plans inclinés.

13. Modèle de travail dentaire (1) fabriqué de manière additive selon l'une des revendications de modèle de travail précédentes, dans lequel une face inférieure (10) du modèle dentaire (4, 4a, 4b) orientée vers la plaque de socle (3, 3a, 3b) est ouverte au moins partiellement de sorte que des moignons, et/ou des analogues d'implant (11), du modèle dentaire (4, 4a, 4b) peuvent être extraits par compression du modèle dentaire (4, 4a, 4b) en direction occlusale.

14. Modèle de travail dentaire (1) fabriqué de manière additive selon l'une des revendications de modèle de travail précédentes, dans lequel la plaque de socle (3, 3a, 3b) et le modèle dentaire (4, 4a, 4b) sont conçus exempts d'aimants.
